Europäisches Patentamt

European Patent Office

Office européen des brevets

(11) Veröffentlichungsnummer: **0 439 998 A1**

## (12) EUROPÄISCHE PATENTANMELDUNG

(21) Anmeldenummer: 90811031.5

(22) Anmeldetag: 27.12.90

(51) Int. Cl.5: **F42C 21/00**

(30) Priorität: **31.01.90 CH 309/90**

(43) Veröffentlichungstag der Anmeldung:
**07.08.91 Patentblatt 91/32**

(84) Benannte Vertragsstaaten:
**AT BE CH DE DK ES FR GB GR IT LI LU NL SE**

(71) Anmelder: **Schweizerische Eidgenossenschaft vertreten durch die Eidg. Munitionsfabrik Thun der Gruppe für Rüstungsdienste Allmendstrasse 74 CH-3602 Thun(CH)**

(72) Erfinder: **Oppliger, Erich Schützenstr. 16 CH-3627 Heimberg(CH)** Erfinder: **Monkewitz, Martin, Dr. Felsbergstr. 6 CH-6006 Luzern(CH)**

(74) Vertreter: **Frauenknecht, Alois J. et al c/o PPS Polyvalent Patent Service AG, Fohrhölzlistrasse 19 CH-5443 Niederrohrdorf(CH)**

(54) **Prüfvorrichtung mit Beschleunigungsrohr.**

(57) Eine Prüfvorrichtung, insbesondere für Zündelemente, hat ein Beschleunigungsrohr (3) mit einem in ihm verschiebbaren Beschleunigungskolben (4). Zur Beschleunigung dieses Beschleunigungskolbens (4) ist der Raum im Beschleunigungsrohr (3) vor seiner einem Auslass (7) zugewandten Stirnfläche mit einer Vakuumpumpe (10) verbindbar. Sobald eine Haltevorrichtung(5) den Beschleunigungskolben (4) freigibt, wird er in Richtung des Auslasses (7) vom Atmosphärendruck beschleunigt. Ein im Beschleunigungskolben (4) lösbar gehaltener Aufschlagkörper (6) vermag sich vom Beschleunigungskolben (4) zu lösen, sobald dieser gegen das Ende des Beschleunigungsrohres (3) aufschlägt und fliegt dann aus dem Auslass (7) des Beschleunigungsrohres (3) heraus gegen den Prüfling (13).

Der Erfindungsgegenstand lässt sich im Bereich der Material- und Qualitätsprüfung ebenfalls einsetzen.

FIG.1

EP 0 439 998 A1

## PRÜFVORRICHTUNG MIT BESCHLEUNIGUNGSROHR

Die Erfindung bezieht sich auf eine Prüfvorrichtung mit einem in einem Beschleunigungsrohr pneumatisch beschleunigbaren, aus einem Auslass des Beschleunigungsrohres bewegbaren Aufschlagkörper, insbesondere zum Prüfen von Zündelementen.

Bei der Prüfung von Zündelementen ist es erforderlich, dass ein Aufschlagkörper mit einer möglichst genau festlegbaren Geschwindigkeit auf den Zündstift des Zündelementes auftrifft. Die Auftreffgeschwindigkeit des Aufschlagkörpers muss für unterschiedliche Zündelemente über einen sehr grossen Bereich veränderbar, dennoch aber möglichst genau einstellbar sein, damit sich reproduzierbare Versuchsergebnisse erzielen lassen. Auch bei anderen Prüfaufgaben kommt es häufig darauf an, dass ein Aufschlagkörper mit einer genau festlegbaren Geschwindigkeit auf den Prüfling auftrifft.

Wie die US-PS 4,349,200 zeigt, ist bereits eine Prüfvorrichtung bekannt, bei der ein Aufschlagkörper in einem Beschleunigungsrohr durch den Überdruck eines Druckspeichers beschleunigt wird. Als Druckmittel ist unter hohem Druck stehendes Helium vorgesehen. Durch die Bewegung des Aufschlagkörpers im Beschleunigungsrohr nimmt der Druck im Druckspeicher ab, da hierbei Gas aus dem Druckspeicher in das Beschleunigungsrohr strömen muss. Dadurch nimmt die den Aufschlagkörper treibende Druckkraft während des Beschleunigungsvorganges ständig ab. Es hat sich gezeigt, dass es hierdurch auch bei jeweils gleichen Ausgangsdrücken zu unterschiedlichen Geschwindigkeiten des aus dem Beschleunigungsrohr austretenden Aufschlagkörpers kommt.

Der Erfindung liegt die Aufgabe zugrunde, eine Prüfvorrichtung der eingangs genannten Art so auszubilden, dass die Austrittsgeschwindigkeit des Aufschlagkörpers in grossen Masse zu verstellen, jedoch für jede Einstellung möglichst genau festzulegen ist.

Diese Aufgabe wird erfindungsgemäss dadurch gelöst, dass am Auslass ein beim Auftreffen des Aufschlagkörpers öffnender Verschluss vorgesehen ist, dass der Aufschlagkörper in Ausgangsstellung an der dem Auslass gegenüberliegenden Seite des Beschleunigungsrohres dichtend gehalten ist und dass der Raum im Beschleunigungsrohr zwischen dem Aufschlagkörper und dem Auslass mit einer Unterdruckquelle in Wirkverbindung steht.

Bei einer solchen Prüfvorrichtung wird der Aufschlagkörper vom Atmosphärendruck angetrieben. Die ihn treibende Kraft verändert sich kaum, wenn die Querschnitte der Nachströmungsöffnungen annähernd gleich dem Innern Querschnitt des Beschleunigungsrohres sind.

Bei der erfindungsgemässen Prüfvorrichtung handelt es sich funktionell um einen Linearbeschleuniger. Dadurch lassen sich sehr genau reproduzierbare Aufschlaggeschwindigkeiten erreichen. Weiterhin ist es dank der Erfindung möglich, die Aufschlaggeschwindigkeiten im grossen Masse zu verändern, ohne dass dadurch die Reproduzierbarkeit der jeweils eingestellten Aufschlaggeschwindigkeit des Aufschlagkörpers nachteilig beeinflusst wird. Die erfindungsgemässe Prüfvorrichtung eignet sich besonders zum Prüfen von zündelementen, da deren Anfeuerungsverhalten durch die Auftreff- und Eindringgeschwindigkeit des Zündstiftes beeinflusst wird. Diese Einflussgrösse kann dank der Erfindung optimal berücksichtigt werden, weil die Geschwindigkeit des gegen den Zündstift des Zündelementes gelangenden Aufschlagkörpers optimal einstellbar ist.

Der Aufschlagkörper kann auf eine besonders hohe Endgeschwindigkeit beschleunigt werden, ohne dass hierzu das Beschleunigungsrohr unerwünscht lang sein muss, wenn gemäss einer vorteilhaften Ausgestaltung der Erfindung der Aufschlagkörper lösbar in einem dichtend im Beschleunigungsrohr geführten und auslasseitig gegen einen Anschlag des Beschleunigungsrohres bewegbaren Beschleunigungskolben gehalten ist. Hierdurch steht für das Wirken des Luftdruckes die grosse Fläche des Beschleunigungskolbens zur Verfügung, während der Aufschlagkörper den üblicherweise gewünschten, kleinen Querschnitt aufweisen kann.

Der Aufschlagkörper kann leicht in den Beschleunigungskolben eingesetzt werden und wird durch den Unterdruck im Beschleunigungsrohr in einer dichtenden Position gehalten, wenn gemäss einer anderen Ausgestaltung der Erfindung der Beschleunigungskolben zur Aufnahme des Aufschlagkörpers eine durchgehende Bohrung aufweist und der Aufschlagkörper mit einem abscherbaren Flansch auf der dem Auslass abgewandten Seite der Bohrung gegen eine Anlagefläche des Beschleunigungskolbens anlegbar ist. Dieser Flansch schert beim Auftreffen des Beschleunigungskolbens auf seinen Anschlag vom Aufschlagkörper ab, so dass der Aufschlagkörper dann vom Beschleunigungskolben freikommt und mit der Geschwindigkeit des Beschleunigungskolbens den Verschluss passiert. Diese Ausführungsform ermöglicht es zudem, Aufschlagkörper unterschiedlicher Masse zu verwenden, um bei einem Zündkörper die Eindringtiefe des Zündstiftes zu beeinflussen.

Alternativ lässt sich anstelle eines abscherbaren Flansches ein ausrastbarer Haltemechanismus vorsehen.

Eine andere, vorteilhafte Ausgestaltung der Erfindung liegt darin, dass an der dem Auslass gegenüberliegenden Seite des Beschleunigungsrohres eine fern-betätigbare Haltevorrichtung zum Halten und Freigeben des Beschleunigungskolbens vorgesehen ist. Hierdurch ist das Halten und Freigeben des Beschleunigungskolbens mit besonders geringem Aufwand und auf einfache Weise zu erreichen. Die Auslösung selbst erfolgt vorzugsweise pneumatisch oder elektrisch; sie kann aber auch rein mechanisch ausgeführt werden.

Die Endgeschwindigkeit des Aufschlagkörpers kann sehr einfach und mit hoher Reproduzierbarkeit eingestellt werden, wenn gemäss einer weiteren Ausgestaltung die Haltevorrichtung in Längsrichtung des Beschleunigungsrohres verschiebbar angeordnet ist.

Durch auswechselbare Beschleunigungsrohre verschiedener Längen kann die gewünschte Endbeschleunigung ebenfalls auf einfache Art in weiten Grenzen vorbestimmt werden. Die Fixierung der Beschleunigungsrohre erfolgt vorteilhafterweise durch Supporte oder Schlitten, in der Art, wie sie von Drehbänken bekannt sind.

Für die genaue Einstellung der Aufschlaggeschwindigkeit ist es vorteilhaft, wenn das Beschleunigungsrohr eine Geschwindigkeitsmesseinrichtung zur Bestimmung der Kolbengeschwindigkeit unmittelbar vor dem Auftreffen auf den auslassseitigen Anschlag aufweist.

Auch die Geschwindigkeit des austretenden Aufschlagkörpers kann genau ermittelt werden, wenn ausserhalb des Beschleunigungsrohres hinter seinem Auslass eine zweite Geschwindigkeitsmesseinrichtung zur Bestimmung der Geschwindigkeit des ausgetretenen Aufschlagkörpers vorgesehen ist.

Die Prüfvorrichtung ist für das Prüfen von Zündelementen besonders günstig ausgebildet, wenn, gemäss einer anderen Ausgestaltung der Erfindung, fluchtend zueinander auf einer Längsführung verschieblich, das Beschleunigungsrohr und eine Prüfkörperaufnahme angeordnet sind.

Das Festhalten des Beschleunigungskolbens im Beschleunigungsrohr kann mit einer sehr einfachen Haltevorrichtung erfolgen, wenn der Beschleunigungskolben auf seiner den Auslass abgewandten Seite einen nach innen gerichteten Flansch zum Hintergreifen von Haltenasen der Haltevorrichtung aufweist.

Eine konstruktiv besonders einfache Ausführungsform der Haltevorrichtung besteht darin, dass sie zwei durch ein Gelenk miteinander verbundene Scherenhebel hat, auf deren dem Kolben zugewandten Enden jeweils eine der Haltenasen vorgesehen ist und deren entgegengesetzt ausgerichtete Hebelarme jeweils eine Schrägfläche aufweisen, wobei beide Schrägflächen vom Gelenk weg divergieren und wenn ferner ein zwischen die Schrägflächen beweglicher, von einem Pneumatikzylinder verschieblicher Betätigungskolben zum Verfahren gegen die Schrägflächen und damit zum Einwärtsschwenken der Haltenasen vorgesehen ist.

Der Verschluss des Auslasses des Beschleunigungsrohres kann sehr unterschiedlich gestaltet sein. Es könnte sich bei ihm beispielsweise um eine beim Auftreffen des Aufschlagkörpers öffnende Ventilklappe handeln. Besonders einfach ist der Verschluss jedoch ausgebildet, wenn er durch eine vom Aufschlagkörper zerstörbare Membran, beispielsweise aus einer randseitig geklebten Folie gebildet ist.

Die Erfindung lässt zahlreiche Ausführungsformen zu. Zur weiteren Verdeutlichung ihres Grundprinzips ist eine davon in der Zeichnung dargestellt und wird nachfolgend beschrieben.

Es zeigen:

Fig. 1 eine teilweise geschnitten und verkürzt dargestellte Seitenansicht der Prüfvorrichtung,

Fig. 2 eine gegenüber der Figur 1 vergrösserte Schnittdarstellung eines Beschleunigungskolbens der Prüfvorrichtung mit eingesetztem Aufschlagkörper,

Fig. 3 den Aufschlagkörper gemäss Fig. 2,

Fig. 4 einen Zündstift in realer Grösse, vor dessen Einsetzen in die Prüfkörperaufnahme,

Fig. 5 den Zündstift Fig. 4 in vergrösserter Darstellung und

Fig. 6 einen Längsschnitt durch eine Haltevorrichtung der Prüfvorrichtung nach Figur 1.

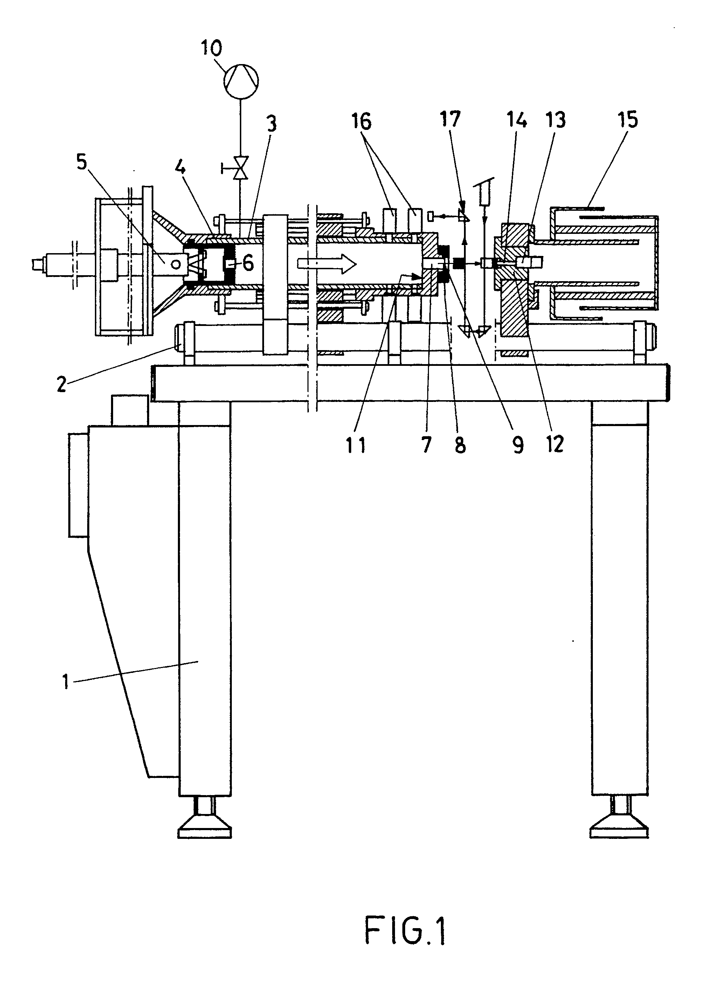

Die Figur 1 zeigt ein Grundgestell 1, auf welchem eine Längsführung 2 mit einem darauf verschiebbaren und in jeder Position arretierbaren Beschleunigungsrohr 3 vorgesehen ist. Auf der in Figur 1 gesehen linken Seite des Beschleunigungsrohres 3 ist in ihm verschieblich ein Beschleunigungskolben 4 angeordnet, der in der gezeigten Grundstellung von einer Haltevorrichtung 5 festgehalten wird. Der Beschleunigungskolben 4 trägt in seiner der Haltevorrichtung 5 abgewandten Stirnfläche einen Aufschlagkörper 6.

An der der Haltevorrichtung 5 gegenüberliegenden Seite hat das Beschleunigungsrohr 3 einen Auslass 7, durch den der Aufschlagkörper 6 hindurch passt und der von einem Verschluss 8 luftdicht verschlossen ist. Dieser Verschluss 8 weist eine dünne Membran 9 auf, die beim Auftreffen des Aufschlagkörpers 6 zerstört wird, so dass dieser den Auslass 7 passieren kann.

Wichtig für den Erfindungsgegenstand ist eine Vakuumpumpe 10, mit der der Raum im Beschleunigungsrohr 3 zwischen der dem Auslass 7 zugewandten Stirnfläche des Beschleunigungskolbens 4 und dem Auslass 7 evakuiert werden kann. Die dem Auslass 7 abgewandte Stirnseite des Beschleunigungskolbens 4 wird vom Atmosphärendruck beaufschlagt. Gibt die Haltevorrichtung 5 den Beschleunigungskolben 4 frei, dann verschiebt er sich mit zunehmender Geschwindigkeit zum Auslass 7 hin, bis dass er gegen eine Anschlagfläche 11 an der Seite des Auslasses 7 gelangt. Der Aufschlagkörper 6 vermag sich dann vom Beschleunigungskolben 4 zu lösen und fliegt aus dem Beschleunigungsrohr 3 heraus.

Fluchtend zum Beschleunigungsrohr 3 ist auf der Längsführung 2 eine Prüfkörperaufnahme 12 angeordnet, die ebenfalls auf der Längsführung 2 verschieblich und in beliebigen Positionen feststellbar ausgebildet ist. Die Prüfkörperaufnahme 12 haltert einen Prüfling 13, bei dem es sich bei diesem Ausführungsbeispiel um ein Zündelement mit einem Zündstift 14 handelt. Da der Zündstift 14 eine wesentlich geringere Masse hat als der Aufschlagkörper 6, bewegt er sich nach dem Auftreffen des Aufschlagkörpers 6 mit einer Geschwindigkeit in das Zündelement hinein, die erheblich höher ist als die Aufschlaggeschwindigkeit des Aufschlagkörpers 6. Ein Splitterschutz 15 schützt bei Verwendung der Prüfvorrichtung vor Splitter des Zündelementes und vor resultierenden Druckwellen.

Zur Ermittlung der Geschwindigkeit des Beschleunigungskolbens 3 unmittelbar vor seinem Auftreffen auf die Anschlagfläche 11 ist am Beschleunigungsrohr 3 eine Geschwindigkeitsmesseinrichtung 16 vorgesehen. Eine zweite Geschwindigkeitsmesseinrichtung 17 befindet sich zwischen dem Auslass 7 des Beschleunigungsrohres 3 und der Prüfkörperaufnahme 12. Sie dient dazu, die Geschwindigkeit des Aufschlagkörpers 6 nach dem Verlassen des Beschleunigungsrohres 3 exakt zu bestimmen und arbeitet auf übliche Weise mit Laserlicht.

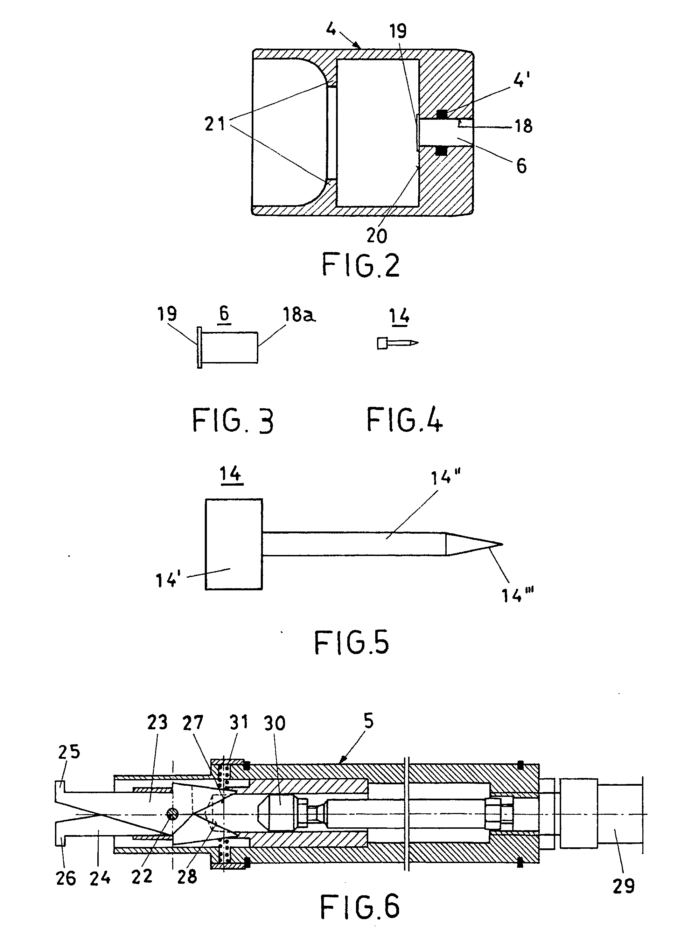

Die Figur 2 verdeutlicht die Gestaltung des Beschleunigungskolbens 4. Zu erkennen ist, dass in einer koaxialen Bohrung 18 dieses Beschleunigungskolbens 4 der Aufschlagkörper 6 von der in der Zeichnung gesehen linken Kolbenseite her eingesetzt ist. Der Aufschlagkörper 6 liegt mit einem Flansch 19 gegen eine der Haltevorrichtung 5 zugewandte Anlagefläche 20 des Beschleunigungskolbens 4 an. Der Flansch 19 ist so bemessen, dass er beim Aufschlag des Beschleunigungskolbens 4 gegen die in Figur 2 gezeigte Auflagefläche 20 abschert und dadurch den Aufschlagkörper 6 freigibt. Als Dichtelement in der Bohrung dient ein O-Ring, welcher in eine Ringnut 4' eingesetzt ist.

Die Figur 2 lässt weiterhin erkennen, dass der Beschleunigungskolben 4 auf seiner der Haltevorrichtung 5 zugewandten Seite einen nach innen gerichteten Flansch 21 aufweist, hinter den die Haltevorrichtung 5 zu greifen vermag, um den Beschleunigungskolben 4 in der in Figur 1 gezeigten Grundstellung festzuhalten.

Figur 3 zeigt den Aufschlagkörper 6 mit seinem Flansch 19 und seiner Aufschlagfläche 18a vor dem Zündstift 14, Figur 4, in realer Grösse, vor dessen Einsetzen in die Prüfkörperaufnahme 12, Figur 1.

Aus Figur 5 ist die Ausgestaltung des Zündstiftes 14 mit seinem Flansch 14', seinem zylindrischen Teil 14" und seiner Spitze 14'" näher ersichtlich.

Die Figur 6 verdeutlicht die Gestaltung der Haltevorrichtung 5. Zu sehen ist, dass diese zwei um ein Gelenk 22 schwenkbare Scherenhebel 23, 24 hat, an deren freie Enden jeweils eine nach aussen gerichtete Haltenase 25, 26 vorgesehen ist, welche zum Halten des Beschleunigungskolbens 4 hinter seinen Flansch 21 zu greifen vermögen. Auf der gegenüberliegenden Hebelarmseite weisen die Scherenhebel 23, 24 jeweils eine Schrägfläche 27, 28 auf. Diese Schrägflächen 27, 28 divergieren vom Gelenk 22 weg. Ein Pneumatikzylinder 29 vermag einen Betätigungskolben 30 gegen die Schrägflächen 27, 28 zu fahren, wodurch die Scherenhebel derart verschwenkt werden, dass die Haltenasen 25, 26 radial nach innen schwenken und dadurch den Beschleunigungskolben 4 freigeben. Die Arretierung der Schrägflächen 27, 28 in der gezeichneten Lage ist durch Federn 31 gewährleistet.

Der zur Entwicklung und Prüfung von mechanischen Zündelementen vorgesehene Erfindungsgegenstand lässt sich universell einsetzen. Erwähnt sei hier die Kalibrierung von Beschleunigungsgebern, von Sicherheitselementen sowie die Prüfung elektronischer und mechanischer Bauelemente unter präzisen mechanischen Belastungsbedingungen. Ebenfalls ist der Einsatz im Bereich der Qualitätsprüfung von Komponenten vorgesehen.

**Patentansprüche**

1. Prüfvorrichtung mit einem in einem Beschleunigungsrohr pneumatisch beschleunigbaren, aus einem Auslass des Beschleunigungsrohres bewegbaren Aufschlagkörper, insbesondere zum Prüfen von Zündelementen, dadurch gekennzeichnet, dass am Auslass (7) ein beim Auftreffen des Aufschlagkörpers (6) öffnender Verschluss (8) vorgesehen ist, dass der Aufschlagkörper (6) in Ausgangsstellung an der dem Auslass (7) gegenüberliegenden Seite des Beschleunigungsrohres (3) dichtend gehalten ist und dass der Raum im Beschleunigungsrohr (3) zwischen dem Aufschlagkörper (6) und dem Auslass (7) mit einer Unterdruckquelle (10) in Wirkverbindung steht.

2. Prüfvorrichtung nach Anspruch 1, dadurch gekennzeichnet, dass der Aufschlagkörper (6) lösbar in einem dichtend im Beschleunigungsrohr (3) geführten und auslasseitig gegen eine Anschlagfläche (11) des Beschleunigungsrohres (3) bewegbaren Beschleunigungskolben (4) gehalten ist.

3. Prüfvorrichtung nach Anspruch 2, dadurch gekennzeichnet, dass der Beschleunigungskolben (4) zur Aufnahme des Aufschlagkörpers (6) eine durchgehende Bohrung (18) aufweist und der Aufschlagkörper (6) mit einem abscherbaren Flansch (19) auf der dem Auslass (7) abgewandten Seite der Bohrung (18) gegen eine Anlagefläche (20) des Beschleunigungskolbens (4) anlegbar ist.

4. Prüfvorrichtung nach zumindest einem der vorangehenden Ansprüche, dadurch gekennzeichnet, dass an der dem Auslass (7) gegenüberliegenden Seite des Beschleunigungsrohres (3) eine fern-betätigbare Haltevorrichtung (5) zum Halten und Freigeben des Beschleunigungskolbens (4) vorgesehen ist.

5. Prüfvorrichtung nach zumindest einem der vorangehenden Ansprüche, dadurch gekennzeichnet, dass die Haltevorrichtung (5) in Längsrichtung des Beschleunigungsrohres (3) verschiebbar angeordnet ist.

6. Prüfvorrichtung nach einem der Ansprüche 1 bis 4, dadurch gekennzeichnet, dass das Beschleunigungsrohr auswechselbar ausgestaltet ist.

7. Prüfvorrichtung nach zumindest einem der vorangehenden Ansprüche, dadurch gekennzeichnet, dass das Beschleunigungsrohr (3) eine Geschwindigkeitsmesseinrichtung (16) zur Bestimmung der Kolbengeschwindigkeit unmittelbar vor dem Auftreffen auf die auslasseitige Anschlagfläche (11) aufweist.

8. Prüfvorrichtung nach zumindest einem der vorangehenden Ansprüche, dadurch gekennzeichnet, dass ausserhalb des Beschleunigungsrohres (3) hinter seinem Auslass (7) eine zweite Geschwindigkeitsmesseinrichtung (17) zur Bestimmung der Geschwindigkeit des ausgetretenen Aufschlagkörpers (6) vorgesehen ist.

9. Prüfvorrichtung nach zumindest einem der vorangehenden Ansprüche, dadurch gekennzeichnet, dass fluchtend zueinander auf einer Längsführung (2) verschieblich das Beschleunigsrohr (3) und eine Prüfkörperaufnahme (12) angeordnet sind.

10. Prüfvorrichtung nach zumindest einem der vorangehenden Ansprüche, dadurch gekennzeichnet, dass der Beschleunigungskolben (4) auf seiner den Auslass (7) abgewandten Seite einen nach innen gerichteten Flansch ( 21) zum Hintergreifen von Haltenasen (25, 26) der Haltevorrichtung (5) aufweist.

11. Prüfvorrichtung nach zumindest einem der vorangehenden Ansprüche, dadurch gekennzeichnet, dass die Haltevorrichtung (5) zwei durch ein Gelenk (22) miteinander verbundene Scherenhebel (23, 24) hat, auf deren dem Beschleunigungskolben (4) zugewandten Enden jeweils eine der Haltenasen (25, 26) vorgesehen ist und deren entgegengesetzt ausgerichtete Hebelarme jeweils eine Schrägfläche (27, 28) aufweisen, wobei beide Schrägflächen (27, 28) vom Gelenk (22) weg divergieren und dass ferner ein zwischen die Schrägflächen (27, 28) beweglicher, von einem Pneumatikzylinder (29) verschieblicher Betätigungskolben (30) zum Verfahren gegen die Schrägflächen (27, 28) und damit zum Einwärtsschwenken der Haltenasen (25, 26) vorgesehen ist.

12. Prüfvorrichtung nach wenigstens einem der vorangehenden Ansprüche, dadurch gekennzeichnet, dass der Verschluss (8) eine vom Aufschlagkörper (6) zerstörbare Membran (9) ist.

FIG.1

FIG.2

FIG. 3  FIG.4

FIG.5

FIG.6

**Europäisches Patentamt**

# EUROPÄISCHER RECHERCHENBERICHT

Nummer der Anmeldung

## EP 90 81 1031

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 034 335 (MULLER) <br> * Spalte 1, Zeile 50 - Spalte 2, Zeile 55; Figuren 1, 2 * <br> – – – | 1 | F <br> 42 C 21/00 |
| D,A | US-A-4 349 200 (WAKEFIELD) <br> – – – – – | | |

| RECHERCHIERTE SACHGEBIETE (Int. Cl.5) |
|---|
| F 42 C <br> F 42 B <br> F 41 B <br> G 01 N |

Der vorliegende Recherchenbericht wurde für alle Patentansprüche erstellt

| Recherchenort | Abschlußdatum der Recherche | Prüfer |
|---|---|---|
| Den Haag | 06 Mai 91 | TRIANTAPHILLOU P. |